# EUROPÄISCHE PATENTANMELDUNG

(11) **EP 4 800 050 A1**
(43) Veröffentlichungstag der Anmeldung: **02.09.2026**
(21) Anmeldenummer: 25160612.5
(22) Anmeldetag: 27.02.2025
(51) Int. Cl.: C08G 18/82, C08J 3/00, C08L 75/04

(54) **LAGERSTABILE POLYURETHANDISPERSION UND DEREN HERSTELLUNG**

(71) Anmelder: Covestro Deutschland AG, 51373 Leverkusen (DE)
(72) Erfinder: Achten, Dirk, 51375 Leverkusen (DE); Schuster, Fabian, 51375 Leverkusen (DE); Fan, Zhirong, 40764 Langenfeld (DE); Link, Daniel, 50735 Köln (DE); Hannig, Frithjof, 40593 Düsseldorf (DE); Weikard, Jan, 51375 Leverkusen (DE); Matuschek, David, 51545 Waldbröl (DE)
(74) Vertreter: Levpat

(57) **Zusammenfassung**

Die Erfindung betrifft ein Verfahren zur Haltbarmachung, Entkeimung und effizientem Transport von Polyurethandispersionen umfassend mindestens die Schritte, Schritt 1) Überführen einer Polyurethandispersion in eine entwässerte Form mit einem Wassergehalt von ≤ 15 Gew.-%, unter Erhalt von entwässerten Polyurethanpolymeren; und Schritt 2) Re-Dispergierung der entwässerten Polyurethanpolymere mit Hilfe einer Dispergier-Mischung enthaltend Wasser und mindestens ein Lösungsmittel unter Erhalt einer weiteren Polyurethandispersion mit einem Gehalt an Lösungsmittel von ≤ 20 Gew.-% sowie die Polyurethandispersion erhältlich nach dem Verfahren und deren Verwendung.

## Beschreibung

Die Erfindung betrifft ein Verfahren zur Haltbarmachung, Entkeimung und effizientem Transport von Polyurethandispersionen umfassend mindestens die Schritte 1) Überführen einer Polyurethandispersion in eine entwässerte Form mit einem Wassergehalt von ≤ 15 Gew.-%, unter Erhalt von entwässerten Polyurethanpolymeren; 2) Re-Dispergierung der entwässerten Polyurethanpolymere mit Hilfe einer Dispergier-Mischung enthaltend Wasser und mindestens ein Lösungsmittel unter Erhalt einer weiteren Polyurethandispersion mit einem Gehalt an Lösungsmittel von ≤ 20 Gew.-%.

### Stand der Technik:

Polyurethandispersionen finden breite Anwendung als Rohstoffe für wässrige Klebstoffe und Lacke. Ihre Verwendung wird jedoch durch ihre Neigung zur Verkeimung und ihre begrenzte Lagerstabilität eingeschränkt. Bekannte Stabilisierungsmaßnahmen umfassen pH-Puffer, Carbodiimide als Hydrolysestabilisatoren und Biozide zur Verkeimungsprävention. Diese Methoden weisen jedoch Nachteile und Limitierungen auf.

Im Stand der Technik sind verschiedene Maßnahmen bekannt, die die Haltbarkeit von Polyurethandispersionen verbessern sollen. Zu nennen sind Substanzen die als pH-Puffer wirken und die die Veränderung des pH der Dispersionen über den Einsatzzeitraum verringern sollen. Das ist wichtig, da die meisten Polyurethandispersionen aufgrund ihrer Zusammensetzung neben UrethanGruppen häufig auch Polyesterbausteine beinhalten, die ihre höchste Lagerstabilität im neutralen Bereich bei pH 7 aufweisen. Abweichungen zu höheren oder niedrigeren pH-Werten als 7, führen zu einer beschleunigten Hydrolyse der dispergierten Polymere und damit zum Verlust von Eigenschaften der Polyurethandispersion.

Eine weitere gebräuchliche Methode zur Stabilisierung besonders von Polyester-Polyurethanen liegt in der Zugabe von Carbodiimiden als Hydrolysestabilisator. Die Stabilisierung ist in der wässrigen Phase allerdings nur bedingt wirksam, bzw. birgt die Gefahr einer Vorvernetzung der Polyurethane mit zum Teil vorhandenen Carboxylatgruppen.

Neben der hydrolytischen Stabilität ist die Stabilität gegen Verkeimung problematisch. Besonders Verunreinigungen in Transportgefäßen und Rohrleitungen in der Produktion, Abfüllung, Umfüllung oder Formulierung haben häufig eine "Infektion" der Dispersionen mit Keimen und Pilzen zur Folge. Im Laufe der fortschreitenden Verkeimung verändert sich nicht nur der pH der Dispersionen, sondern auch deren Eigenschaften durch Molekulargewichtsabbau. Des Weiteren wird häufig eine starke Geruchsbelästigung durch Abbauprodukte der Bakterien und Pilze wahrgenommen.

Die Verkeimung von Polyurethandispersionen wird typischerweise durch Einsatz von Bioziden, wie Fungiziden, Bakterizide sowie z.B. auch durch verdünnte Peroxide behandelt. Die immer strenger werdenden Vorschriften und Einsatzgrenzen für den Einsatz von Bioziden sowie die Gefahr der Veränderung der Eigenschaften durch andere Stabilisatoren, wie Oxidation, Verfärbung etc.., limitiert auch hier die Wirksamkeit der verfügbaren Maßnahmen.

Sind Polyurethandispersionen erst einmal verkeimt, ist es außerdem sehr schwierig und teuer, eine Keimfreiheit wieder herzustellen beziehungsweise eine Fall zu Fall Analyse durchzuführen, ob die verkeimte Dispersion noch einsatzfähig ist.

Aus dem Stand der Technik ist ein Verfahren zur Herstellung eines trockenen Polymers aus einer wässrigen Polymerdispersion bekannt (WO 2021/233749 A1). Das offenbarte Verfahren umfasst die folgenden Schritte:
I) Bereitstellen einer wässrigen Polymerdispersion, welche kristallisierende Polyurethanpartikel mit einer mittleren Partikelgröße von ≤ 500 nm enthält;
II) Lagerung der in Schritt I) bereitgestellten Dispersion bei einer Temperatur von ≤ 0 °C bis zur Bildung eines Niederschlags;
III) Isolierung des in Schritt II) gebildeten Niederschlags;
IV) Entfernung von Wasser aus dem in Schritt III) isolierten Niederschlag zur Gewinnung eines wasserarmen Niederschlags.

Das bekannte Verfahren ermöglicht die Herstellung einer festen partikulären Zusammensetzung, die als Baumaterial in additiven Fertigungsverfahren, als Beschichtung, Klebstoff oder als Gummi verwendet werden kann.

Dieses aus dem Stand der Technik bekannte Verfahren adressiert somit die Entwässerung von Polyurethandispersionen und die Gewinnung eines trockenen Polymerprodukts. Es offenbart jedoch keine Methode zur (Re-)Dispergierung des entwässerten Produkts oder zur Verbesserung der Lagerstabilität und Keimfreiheit von Polyurethandispersionen.

Aus dem Stand der Technik ist weiter eine Klebstoffzusammensetzung und ein Verfahren zur Dispergierung von Polyurethanfeststoffen aus der WO2022122521A1 bekannt. Die hierin offenbarte Zusammensetzung umfasst: a) ein Polyurethanpolymer, b) ein Lösungsmittel und c) ein Co-Lösungsmittel, wobei: das Polyurethanpolymer ein intern und/oder extern hydrophilisiertes thermoplastisches Polyurethan mit einem massengemittelten Molekulargewicht Mw von ≥ 50.000 g/mol ist. Das Lösungsmittel ein polar-aprotisches Lösungsmittel, insbesondere Methylethylketon (MEK). Das Co-Lösungsmittel ist Wasser, wobei das Polyurethanpolymer, das Lösungsmittel und das Co-Lösungsmittel in solchen Mengen vorliegen, dass sie eine Dispersion bilden. Dieses aus dem Stand der Technik bekannte Verfahren adressiert somit die Dispergierung von Polyurethanfeststoffen unter Verwendung eines spezifischen Lösungsmittel/Co-Lösungsmittel-Systems. Es offenbart jedoch kein zweistufiges Verfahren zur Entwässerung und anschließenden Dispergierung von Polyurethandispersionen mit dem Ziel der Verbesserung der Lagerstabilität und Keimfreiheit.

Daher war es eine Aufgabe der vorliegenden Erfindung, mindestens einen Nachteil des Standes der Technik zu minimieren. Weiterhin war es eine Aufgabe der vorliegenden Erfindung, ein Verfahren bereitzustellen, das die Haltbarkeit von Polyurethandispersionen signifikant verbessert und gleichzeitig eine effektive Entkeimung ermöglicht.

Überraschenderweise wurde gefunden, dass durch Entwässern und Re-Dispergieren eine Polyurethandispersion, die Haltbarkeit der keimfreie Lagerstabilität erhöht werden kann. In einem ersten Aspekt betrifft die Erfindung daher ein Verfahren zur Haltbarmachung und Entkeimung von Polyurethandispersionen umfassend mindestens die Schritte:
1) Überführen einer Polyurethandispersion in eine entwässerte Form mit einem Wassergehalt von ≤ 15 Gew.-%, bevorzugt ≤ 10 Gew.-% und mehr bevorzugt ≤ 5 Gew.-% und ganz besonders bevorzugt ≤ 2 Gew.-% unter Erhalt von entwässerten Polyurethanpolymeren;
2) Re-Dispergierung der entwässerten Polyurethanpolymere mit Hilfe einer Dispergier-Mischung enthaltend Wasser und mindestens ein Lösungsmittel unter Erhalt einer weiteren Polyurethandispersion mit einem Gehalt an Lösungsmittel von ≤ 20 Gew.-% bevorzugt ≤ 10 Gew.-% und mehr bevorzugt ≤ 5 Gew.-%.

Das Überführen der Polyurethandispersion, im Folgenden auch PUD genannt, in Schritt 1) des erfindungsgemäßen Verfahrens, in eine entwässerte Form, kann auf jegliche Weise erfolgen, die der Fachmann hierfür auswählen würde.

Bevorzugt weist die Polyurethandispersion vor dem Überführen in eine entwässerte Form in Schritt 1) eine Menge an Wasser in einem Bereich von 10 bis 80 Gew.-%, bevorzugt von 20 bis 70 Gew.-%, besonders bevorzugt von 25 bis 55 Gew.-%, bezogen auf die Gesamtmasse der Polyurethandispersion auf.

### Schritt 1):

Der Entwässerungsschritt 1) des erfindungsgemäßen Verfahrens kann mittels verschiedener bekannter Techniken durchgeführt werden, einschließlich, aber nicht beschränkt auf:
1. Salzkoagulation: Durch Zugabe von Elektrolyten wird die Stabilität der Dispersion gestört, was zur Ausfällung der Polymerpartikel führt. Die Koagulation wird typischerweise bei Temperaturen unterhalb von 60°C durchgeführt. Es werden agglomerierte entwässerte Polyurethanpolymere als Partikel in Wasser erhalten, von denen überschüssiges Wasser durch Filtration abgetrennt werden kann, bevor durch anschließende thermische Trocknung der Wassergehalt auf den Zielwert ≤ 15% eingestellt wird.
2. Ausfrieren: Die Dispersion wird auf Temperaturen unter 0°C abgekühlt, wodurch das Wasser gefriert und die Polymerpartikel agglomerieren. Nach dem Auftauen werden agglomerierte entwässerte Polyurethanpolymere als Partikel in Wasser erhalten, von denen überschüssiges Wasser durch Filtration abgetrennt werden kann, bevor durch anschließende thermische Trocknung der Wassergehalt auf den Zielwert ≤ 15% eingestellt wird.
3. Scherung: Hohe Scherkräfte können zur Koagulation der Dispersion führen. Gegebenenfalls kann neben erhöhten Temperaturen die Dispersion vorher doch Veränderungen des pH oder durch Salzzugabe destabilisiert werden, um eine Scherung zu vereinfachen. Es werden agglomerierte entwässerte Polyurethanpolymere als Partikel in Wasser erhalten, von denen überschüssiges Wasser durch Filtration abgetrennt werden kann, bevor durch anschließende thermische Trocknung der Wassergehalt auf den Zielwert von ≤ 15 Gew.-% eingestellt werden kann.
4. Sprühtrocknung: Die Dispersion wird in feine Tröpfchen zerstäubt und in einem heißen Luftstrom aggregiert und getrocknet. Dies führt zu einem feinen Pulver von entwässerten Polyurethanpolymeren. Temperaturen des Luftstroms müssen dabei auf die Dispersion angepasst werden, um eine stabile Pulverphase zu erhalten. Die Temperaturen liegen dabei üblicherweise in einem Bereich von 80 bis 150 °C.
5. Thermische Behandlung: Erhitzen der Dispersion kann zur Koagulation führen, insbesondere bei Dispersionen mit temperaturabhängiger Stabilität. Hierbei werden typischerweise Temperaturen bis zum Siedepunkt der wässrigen Phase verwendet. Es werden agglomerierte entwässerte Polyurethanpolymere als Partikel in Wasser erhalten, von denen überschüssiges Wasser durch Filtration abgetrennt werden kann, bevor durch anschließende thermische Trocknung der Wassergehalt auf den Zielwert von ≤ 15 Gew.-% eingestellt werden.

Der anschließende Trocknungsprozess kann durch eine oder mehrere der folgenden Prozesse erfolgen:
1. Schneckenentgasung bei Unterdruck und bei Temperaturen oberhalb Glastemperatur des und / oder des Schmelzpunktes der Polymere.
2. Eindampfen: erfolgt bei erhöhten Temperaturen gegebenenfalls unter Vakuum.
3. Vakuumtrocknung: erfolgt bei niedrigen Temperaturen von nicht mehr als 80 °C und ermöglicht eine schonende Trocknung.
4. Kombination von Temperaturen und trockener Luft in einem Wirbelschichtprozess: erfolgt bei maximaler Temperatur von 80 °C und eignet sich besonders für pulverförmige Produkte.
5. Umlufttrockner: erfolgt bei Temperaturen unterhalb der Glastemperatur und / oder der Schmelztemperatur der Polymere und erlaubt die kostengünstige Trocknung auch größerer Mengen in Batch oder kontinuierlichen Prozessen.
6. Gefriertrocknung: erfolgt bei Temperaturen unter 0°C und bei Unterdruck die eine schonende Methode besonders für temperaturempfindliche Produkte darstellt.

Besonders bevorzugt wird ein Wärmepumpen-Umlufttrockner bei einer Temperatur unterhalb der Glasübergangstemperatur und / oder der Schmelztemperatur des Polymers eingesetzt.

Bevorzugt wird die PUD in Schritt 1) des Verfahrens einer Entwässerung in Form eines Ausfrierens, wie unter Punkt 2. der zuvor beschriebenen Entwässerungstechniken aufgeführt, mit anschließendem Umlufttrocknen, wie unter Punkt 5. der zuvor beschriebenen Trocknungsprozesse beschrieben, unterzogen.

Bevorzugt wird das Überführen der Polyurethandispersion, im Folgenden auch Ausgangs-Polyurethandispersion genannt, in das entwässerte Polyurethanpolymer in Schritt 1) mit Hilfe von Fällung und Schneckenentgasung oder über einen Fällungs- und Trocknungsprozess vorgenommen. Die Schneckenentgasung findet bevorzugt bei einer Temperatur in einem Bereich von 100 bis 150°C statt. Die Trocknung findet bevorzugterweise bei Temperaturen unterhalb des Schmelzpunktes mit trockener Luft in einem Wärmeaustausch-Umlufttrockner statt. Die Bestimmung des restlichen Wassergehalts wird bevorzugt mittels Trockenwage vorgenommen. Das Überführen der Polyurethandispersion in das entwässerte Polyurethanpolymer in Schritt 1) erfolgt vorzugsweise durch einen sukzessiven Fällungs- und Trocknungsprozess, besonders bevorzugt findet der Fällungsprozess durch Ausfrieren bei einer Temperatur in einem Bereich von -1°C bis -50°C statt bis das Produkt vollständig eingefroren ist, insbesondere die Wasserphase fest ist. Nach dem Auftauen der eingefrorenen Dispersion wird eine Aufschlämmung von aggregierten Polyurethanpolymerpartikeln in Wasser erhalten, von der überschüssiges Wasser abfiltriert wird. Die Trocknung der verbleibenden Polyurethanpolymerpartikel findet bevorzugt mit warmer trockener Luft, dem Umlufttrocknen, vorzugsweise bei einer Temperatur in einem Bereich von 20°C bis 50°C für einen Zeitraum von 1h bis 48h, besonders bevorzugt von 5 bis 12 h.

### Schritt 2):

Das erfindungsgemäße Re-Dispergieren der entwässerten Polyurethanpolymere aus Schritt 1) erfolgt mit Hilfe einer Dispergier-Mischung enthaltend Wasser und mindestens ein Lösungsmittel unter Erhalt einer weiteren Polyurethandispersion mit einem Gehalt an Lösungsmittel von ≤ 20 Gew.-% in Schritt 2). Schritt 2) kann auf jegliche Weise erfolgen, die der Fachmann hierfür auswählen würde. Bevorzugt findet das Re-Dispergieren in Schritt 2) mit Hilfe einer Dispergier-Mischung statt, die mindestens 20 Gew.-% und weniger als 80 Gew.-%, bevorzugt mindestens 30 Gew.-% und weniger als 75 Gew.-%, und besonders bevorzugt mindestens 35 Gew.-% und weniger als 70 Gew.-% Wasser enthält.

Während der Re-Dispergierung können neben weiterem Wasser zur Einstellung des Feststoffgehaltes auch Zusätze wie Entschäumer, Emulgatoren, Stabilisatoren und andere übliche Hilfsstoffe zugegeben werden, um die Effizienz des Prozesses und die Stabilität der resultierenden Dispersion zu verbessern.

Die weitere Polyurethandispersion nach Schritt 2) weist einen Feststoffgehalt von ≥ 20 Gew.-%, vorzugsweise ≥ 30 Gew.-%, besonders bevorzugt ≥ 35 Gew.-%, höchst bevorzugt ≥ 40 Gew.-%, idealerweise in einem Bereich von ≥ 45 % Gew.-% und ≤ 65% Gew.-% auf.

Der Feststoffanteil der Polyurethandispersion vor der Entwässerung in Schritt 1) des erfindungsgemäßen Verfahrens kann sich vom Feststoffanteil nach der Re-Dispergierung in Schritt 2) unterscheiden oder näherungsweise gleich sein. Bevorzugt unterscheidet sich der Feststoffgehalt der weiteren PUD nach Schritt 2) von dem Feststoffgehalt der PUD vor Schritt 1) um nicht mehr als ± 15 Gew.-%, mehr bevorzugt um nicht mehr als ± 10 Gew.-%, besonders bevorzugt um nicht mehr als ± 5 Gew.-%, bezogen auf den Feststoffgehalt der PUD vor Schritt 1).

Das Lösungsmittel der Dispergier-Mischung kann jedes Lösungsmittel sein, das der Fachmann hierfür auswählen würde. Bevorzugt handelt es sich bei dem Lösungsmittel um ein organisches Lösungsmittel.

In einer bevorzugten Ausführungsform des Verfahrens ist mindestens eines des mindestens einen Lösungsmittels zumindest teilweise wasserlöslich. Bevorzugt löst sich das Lösungsmittel zu mindestens 10 Gew.-%, mehr bevorzugt zu mindestens 20 Gew.-%, und besonders bevorzugt zu mindestens 30 Gew.-%, bei 23°C in Wasser.

In einer bevorzugten Ausführungsform des Verfahrens weist mindestens eines des mindestens einen Lösungsmittels entweder einen Siedepunkt unterhalb von 100°C, bevorzugt von unterhalb 90 °C auf oder bildet ein Azeotrop mit Wasser.

In einer bevorzugten Ausführungsform des Verfahrens ist das mindestens eine Lösungsmittel ausgewählt aus der Gruppe bestehend aus einem Keton, einem Ester, einem Ether, einem Carbonat, einem Alkohol, einem Amin, einem Heterocyclus, einem Sulfoxid, einem Aromaten oder einer Mischung aus mindestens zwei hiervon. Typische geeignet Lösungsmittel für das entwässerte Polymer aus Schritt 1) sind Aceton, Methylethylketon, Methylacetat, Ethylacetat, Isopropylacetat, Isobutylacetat, Methanol, Ethanol, Isopropanol, N-Methyl-2-pyrrolidon, Pyridin, DMSO, Tetrahydrofuran, Dimethylcarbonat, Diethylcarbonat, Ethylencarbonat, Toluol und andere bekannte Lösungsmittel für Polyurethane. Typische zumindest teilweise wasserlösliche Lösungsmittel mit einem Siedepunkt < 100°C sind Tetrahydrofuran, Aceton, Methylethylketon, Ethanol, Isopropanol, Methylacetat, Dimethylcarbonat, und andere. Besonders bevorzugte Lösungsmittel sind Ketone und Ester mit einem Siedepunkt ≤ 100° C.

In einer bevorzugten Ausführungsform des Verfahrens ist zumindest eines des zumindest einen Lösungsmittels ein Keton ist, bevorzugt Aceton.

In einer bevorzugten Ausführungsform des Verfahrens ist das mindestens eine Lösungsmittel ausgewählt aus der Gruppe bestehend aus Aceton, Methylethylketon, Ethylacetat, Methylacetat, Methanol, Ethanol, Isopropanol, Dimethylcarbonat, N-Methyl-2-pyrrolidon, Tetrahydrofuran oder einer Mischung aus mindestens zwei hiervon.

In einer bevorzugten Ausführungsform des Verfahrens ist zumindest eines des zumindest einen Lösungsmittels ein Keton, besonders bevorzugt Aceton. Bevorzugt liegt das Verhältnis von Wasser zu dem zumindest teilweise wasserlöslichen Lösungsmittel in einem Bereich von 1:1 bis 1:5, mehr bevorzugt von 1:1 bis 1:3, besonders bevorzugt von 1:1 bis 1:2.

In einer bevorzugten Ausführungsform des Verfahrens findet die Re-Dispergierung aus Schritt 2) in mindestens zwei Schritten statt:
2') mechanisches Vermengen der entwässerten Polyurethanpolymere aus Schritt 1) mit der Dispergier-Mischung umfassend mindestens Wasser und mindestens ein Lösungsmittel unter Erhalt der weiteren Polyurethandispersion noch enthaltend Lösungsmittel > 20 Gew.-%.
2'') Entfernen des mindestens einen Lösungsmittels aus der Dispersion bis auf einen Restwert ≤ 20 Gew.-%.

Das mechanische Vermengen in Schritt 2') wird bevorzugt vorgenommen, ausgewählt aus der Gruppe bestehend aus a) Rühren: Geeignet für niedrigviskose Systeme. b) Hochgeschwindigkeitsmischen: Für schnelle und effiziente Dispergierung. c) Ultraschallbehandlung: Kann zur Verbesserung der Dispergierung eingesetzt werden oder einer Kombination aus mindestens zwei hieraus.

Die Re-Dispergierung der entwässerten Polyurethanpolymere mit Hilfe der Dispergier-Mischung in Schritt 2') findet vorzugsweise bei einer Temperatur < 100 °C, mehr bevorzugt ≤ 80 °C besonders bevorzugt ≤ 60 °C statt. Das Gewichtsverhältnis von entwässerten Polyurethanpolymeren zu Dispergier-Mischung beträgt vorzugsweise ≤ 1 zu 4, mehr bevorzugt ≤ 1 zu 3, noch mehr bevorzugt ≤ 1 zu 2, besonders bevorzugt in einem Bereich von 1 zu 1 bis 1 zu 5, ganz besonders bevorzugt in einem Bereich von 1 zu 2 bis 1 zu 4.

Das Entfernen des mindestens einen Lösungsmittels, bevorzugt durch Abdestillieren, aus der Dispersion bis auf einen Restwert ≤ 10 Gew.-% in Schritt 2") erfolgt vorzugsweise bei einem Druck ≤ 1 bar, besonders bevorzugt ≤ 0,5 bar. Die Lösungsmittelentfernung in Schritt 2") wird bevorzugt vorgenommen, ausgewählt aus der Gruppe bestehend aus: a) Vakuumdestillation: Ermöglicht eine schonende Entfernung des Lösungsmittels. b) Strippendes Verfahren: Entfernung des Lösungsmittels durch Einleiten von Inertgas. c) Membranverfahren: Selektive Entfernung des Ketons durch geeignete Membranen.

Bevorzugt enthält die Dispergier-Mischung zumindest Wasser und ein zumindest teilweise wasserlösliches Keton mit einem Siedepunkt unterhalb von Wasser.

In einer bevorzugten Ausführungsform des Verfahrens wird die PUD vor der Entwässerung in Schritt 1) oder das entwässerte Polyurethanpolymer nach der Entwässerung in Schritt 1) formuliert, besonders bevorzugt vor der Entwässerung in Schritt 1). Unter "formuliert", "formulieren", "Formulierung" wird gemäß der Erfindung verstanden, dass die Polyurethandispersion weitere Zusatzstoffe aufweist, die homogen in einem dafür geeigneten Gerät, beispielsweise einem Extruder, in die PUD eingearbeitet werden. Bevorzugt werden Zusatzstoffe eingesetzt, wie sie üblicherweise für die Herstellung von Klebstoffen, Lacken, Gummi- oder thermoplastische Polymeren eingesetzt werden. Solche Zusatzstoffe bei der Formulierung sind bevorzugt:
- Emulgatoren,
- Weichmacher
- Andere Dispersionen
- UV-Stabilisatoren,
- Flammschutzmittel,
- Füllstoffe,
- Pigmente,
- Farbstoffe,

Die Zusatzstoffe können jeweils in einer Menge in einem Bereich von 0 bis 25 Gew.-%, bevorzugt von 0,1 bis 15 Gew.-%, besonders bevorzugt von 0,5 bis 10 Gew.-%, bezogen auf die Gesamtmasse der Polyurethandispersion vorliegen. Bevorzugt weist die Polyurethandispersion eine Gesamtmenge an Zusatzstoffen in einem Bereich von 0 bis 30 Gew.-%, mehr bevorzugt von 0,1 bis 25 Gew.-%, besonders bevorzugt von 1 bis 20 Gew.-%, bezogen auf die Gesamtmasse der Polyurethandispersion auf.

Das Gewichtsverhältnis von entwässertem Polyurethanpolymer zu Dispergier-Mischung beträgt vorzugsweise 1:9 bis 5:5, besonders bevorzugt 2:8 bis 4:6.

Ein weiterer Aspekt der Erfindung ist eine Polyurethandispersion erhältlich nach dem erfindungsgemäßen Verfahren, wobei der Wassergehalt in der Dispergier-Mischung dem Wassergehalt in der re-dispergierten Polyurethandispersion in einem Bereich von +30% bis -15%, bezogen auf den Wassergehalt der ursprünglichen Polyurethandispersion entspricht.

Bevorzugt ist eine weitere PUD erhältlich nach dem erfindungsgemäßen Verfahren, wobei die Teilchengröße der Partikel in der erhalten Polyurethandispersion nach dynamischer Lichtstreuung eine gewichtsgemittelte Teilchengröße von 50 nm bis 2000 nm, bevorzugt 80 nm bis 500 nm und besonders bevorzugt 100 nm bis 300 nm umfassen.

In einer bevorzugten Ausführungsform der Polyurethandispersion wird die Entwässerung in Schritt 1) örtlich und zeitlich unabhängig von der Re-Dispergierung in Schritt 2) durchgeführt.

Die Entwässerung in Schritt 1) und die Re-Dispergierung in Schritt 2) kann an verschiedenen Orten erfolgen, vorzugsweise auf unterschiedlichen Kontinenten, bevorzugt mit Schiffstransport dazwischen.

In einer bevorzugten Ausführungsform des Verfahrens weist das Produkt aus Schritt 1), also das entwässerte Polyurethanpolymer, eine Haltbarkeit von ≥ 3 Monaten, bevorzugt von ≥ 4 Monaten, besonders bevorzugt von ≥ 6 Monaten auf.

Charakterisierung der Haltbarkeit: Unter Haltbarkeit, auch Alterungsstabilität genannt, der entwässerten Polyurethanpolymere wird verstanden, dass das entwässerte Polyurethanpolymer nach einer Lagerung von ≥ 3 Monaten, bevorzugt von ≥ 4 Monaten, besonders bevorzugt von ≥ 6 Monaten immer noch die gleiche Fähigkeit besitzt in Schritt 2) zu einer weiteren Polyurethandispersion re-dispergiert zu werden wie ein direkt unmittelbar nach Schritt 1) re-dispergiertes Polyurethanpolymer. Bevorzugt sind die Eigenschaften der durch Re-Dispergierung erhaltenen weiteren Polyurethandispersion vergleichbar zu einer weiteren Polyurethandispersion, die durch Entwässerung der Polyurethandispersion hergestellt wurde und direkt, bevorzugt innerhalb von 1 bis 48 h, mehr bevorzugt von 2 bis 24 h, wieder re-dispergiert wird. Bevorzugt unterscheiden sich die re-dispergierten Polyurethandispersionen nach Lagerung von ≥ 3 Monaten, bevorzugt von ≥ 4 Monaten, besonders bevorzugt von ≥ 6 Monaten verglichen mit den direkt nach Schritt 1) re-dispergierten Polyurethandispersionen in den Eigenschaften wie Feststoffgehalt, Teilchengröße und Lösungsviskosität des getrockneten Polyurethanpolymers um ≤ 30%, bevorzugt ≤ 20%, bezogen auf die direkt nach Schritt 1) re-dispergierte Polyurethandispersion. Die Alterungsstabilität der entwässerten Polyurethanpolymere wird über die Veränderung der Lösungsviskosität bei einer Feststoffkonzentration des Polymers von 10% in einer geeigneten Lösungsmittelformulierung untersucht. Eine akzeptable Alterungsstabilität liegt vor, wenn die Lösungsviskosität sich um einen Wert ≤ 30%, vorzugsweise ≤ 20% vom Ausgangswert ändert.

In einer bevorzugten Ausführungsform der Polyurethandispersion ist die erhaltene Polyurethandispersion keimfrei, bevorzugt keimfrei gemäß dem BacTrac-Impedanz und dem Dip-Test, wie im Folgenden beschrieben.

Charakterisierung der Keimfreiheit:
Unter keimfrei wird gemäß der Erfindung verstanden, dass die Polyurethandispersion in einem BacTrac-Impedanz und einem Dip-Test, wie er in den Methoden beschrieben wird eine Impedanz von weniger als 8 innerhalb von 72h Laufzeit aufweist sowie im Dip Test eine Keimbelastung von < 10000 Mikroben / ml, bevorzugt weniger als 5000 Mikroorganismen / ml, ausgewertet nach dem, in jedem Dip-Test beiliegenden, Schaubild.

Ein weiterer Aspekt der Erfindung betrifft eine Verwendung der erfindungsgemäßen weiteren Polyurethandispersion oder erfindungsgemäß hergestellten weiteren Polyurethandispersion zur Formulierung von Klebstoffen oder Lacken.

Der Feststoffgehalt der Polyurethandispersion vor Schritt 1) des erfindungsgemäßen Verfahrens liegt bevorzugt zwischen 20 bis 70 Gew.-%, bevorzugt 30 bis 65 Gew.-% und besonders bevorzugt zwischen 35 bis 62 Gew.-%.

Geeignete Ausgangs-Polyurethandispersionen (PUD) weisen vorzugsweise ein mittleres Molekulargewicht Mw ≥ 20.000 Dalton nach GPC in THF über Polystyrolstandard auf und haben vorzugsweise einen Schmelzpunkt ≥ 30°C und/oder eine Glastemperatur ≥ 30°C nach DSC.

Bevorzugte Polyurethandispersionen, die in Schritt 1) eingesetzt werden, enthalten aliphatische Urethan- und Harnstoffsegmente basierend auf der Reaktion von aliphatischen und/oder aromatischen Polyisocyanaten, bevorzugt Diisocyanaten mit Diolen, Diaminen und/oder Wasser.

Typische aliphatische Di-Isocyanate sind Pentamethylendiisocyanat PDI, 1,6-Hexamethylendiisocyanat HDI, 4,4'-Diisocyanato-dicyclohexyl-methan H12MDI, 1-Isocyanato-3,3,5-trimethyl-5-isocyanatomethyl-cyclohexan (= IPDI, Isophorondiisocyanat), sowie Mischungen von mindestens zwei hiervon.

Typische Diole sind Polyetherdiole, Polyesterdiole und Polycarbonatdiole. Typische Amine sind aliphatische primäre und sekundäre Amine.

Geeignete Ausgangs-Polyurethandispersionen, die bevorzugt in dem erfindungsgemäßen Verfahren verwendet werden können, können nach verschiedenen bekannten Verfahren hergestellt werden. Besonders zu nennen sind hierbei, ohne Anspruch auf Vollständigkeit, das Schmelzeverfahren, der Ketimin-Ketazin Prozess und das Acetonverfahren. Eine gute Aufstellung über gängige Verfahren zur Herstellung von Polyurethandispersionen ist dabei in der Dissertation (Strategien zur Vermeidung von Kratzern in intrinsisch weichen Lackschichten) von Christopher Alt an der Universität Darmstadt 2016 zu finden.

Polyurethandispersionen, die in dem erfindungsgemäßen Verfahren verwendet werden können, haben bevorzugt ein mittleres Molekulargewichtsmittel Mw nach GPC von ≥ 20.000 Dalton und enthalten interne hydrophile Gruppen in einer Konzentration von ≥ 0,1 Gew.-%, bevorzugt ≥ 0,2 Gew.-% und ganz besonders bevorzugt ≥ 0,3 Gew.-% und ≤ 10 Gew.-%, die eine Dispergierung erleichtern. Typische hydrophile Gruppen sind dabei Polyethylenoxidoligomere, Sulfonatgruppen, Ammoniumgruppen und Carboxylatgruppen.

Das mindestens eine Polyurethan, das in der Polyurethandispersion PUD enthalten ist, ist bevorzugt erhältlich aus der Umsetzung mindestens der Komponenten:
A) wenigstens einer Polyolkomponente,
B) wenigstens einer Polyisocyanatkomponente,
C) wenigstens einer, mindestens eine hydrophilierende Gruppe aufweisende, Hydrophilierungs-Komponente,
D) gegebenenfalls mono-, di-, und/oder tri-aminofunktionelle und/oder hydroxyami-nofunktionelle Verbindungen, und
E) gegebenenfalls sonstige isocyanatreaktive Verbindungen.

Geeignete Polyolkomponenten A) sind Verbindungen mit mindestens zwei gegenüber Isocyanaten reaktionsfähigen Wasserstoffatomen. Bevorzugt weist die Polyolkomponente A) ein zahlenmittleres s Molekulargewicht Mn in einem Bereich von 62 bis 18000 g/mol, besonders bevorzugt von 62 bis 4000 g/mol auf.

Bevorzugt ist die Polyolkomponente A) ausgewählt aus der Gruppe bestehend aus einem Polyetherpolyol, einem Polyesterpolyol, einem Polycarbonatepolyol, einem Polylactonepolyol und einem Polyamidpolyol oder Mischungen aus mindestens zwei hiervon. Bevorzugte Polyole für die Polyolkomponente A) weisen bevorzugt 2 bis 4, besonders bevorzugt 2 bis 3 Hydroxylgruppen, ganz besonders bevorzugt 2 Hydroxylgruppen auf. Auch Gemische verschiedener derartiger Verbindungen kommen in Frage.

Als Polyesterpolyole kommen insbesondere lineare Polyesterdiole oder auch schwach verzweigte Polyesterpolyole in Betracht, wie sie in bekannter Weise aus aliphatischen, cyc-loaliphatischen oder aromatischen Di- oder Polycarbonsäuren, wie z.B. Bernstein-, Methyl-bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder Mischungen von mindestens einem hiervon mit mehrwertigen Alkoholen, wie z.B. Ethandiol, Di-, Tri-, Tetraethyl-englykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder einer Mischung aus mindestens zwei hiervon, gegebenenfalls unter Mitverwendung höherfunktioneller Polyole, wie Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder Mischungen von mindestens zwei hiervon zur Herstellung der Polyester verwendet werden.

Selbstverständlich kann es sich bei den Polyesterpolyolen auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Auch Hydroxylgruppen aufweisende Polycarbonate kommen als Polyolkomponenten A) in Betracht, z.B. solche, die durch Umsetzung von Diolen wie 1,4-Butandiol und/oder 1,6-Hexandiol mit Diarylcarbonaten, wie Diphenylcarbonat, Dialkylcarbonaten, wie Dimethylcarbonat oder Phosgen sowie Mischungen von mindestens zwei hiervon hergestellt werden können. Durch die zumindest teilweise Verwendung von Hydroxylgruppen aufweisenden Polycarbonaten kann die Hydrolysebeständigkeit der Polyurethandispersionen verbessert werden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukom-ponenten A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pen-taerythrit oder Zucker oder an Wasser zugänglich sind.

Ebenfalls geeignete Komponenten A) sind niedermolekulare Diole, Triole und/oder Tetra-ole wie z.B. Ethandiol, Di-, Tri-, Tetraethylenglykol, 1,2-Propandiol, Di-, Tri-, Tetrapropy-lenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylol-cyclohexan, Octandiol-1,8, Decandiol-1,10, Dodecandiol-1,12, Neopentylglykol, 1,4-Cyclohexandiol, 1,4-Cyclohexan-dimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pen-taerythrit, Dipenthaerytrit oder deren Gemische, gegebenenfalls unter Mitverwendung weiterer nicht genannter Diole bzw. Triole.

Als Polyolkomponente A) können auch Umsetzungsprodukte der genannten Polyole, insbesondere der niedermolekularen Polyole, mit Ethylen- und/oder Propylenoxid eingesetzt werden.

Die niedermolekularen Komponenten A) haben bevorzugt ein zahlenmittleres Molekular-gewicht Mn von 62 bis 400 g/ mol und werden bevorzugt in Kombination mit den oben beschriebenen Polyesterpolyolen, Polylactonen, Polyethern und/oder Polycarbonaten eingesetzt.

Die Polyolkomponente A) ist in dem Polyurethan der PUD bevorzugt in einem Bereich von 20 bis 95 Gew.-%, besonders bevorzugt von 30 bis 90 Gew.-% und ganz besonders bevorzugt von 65 bis 90 Gew.-%, bezogen auf die Gesamtmasse der Polyurethans Zusammensetzung enthalten.

Als Komponenten B) sind beliebige organische Verbindungen geeignet, die mindestens zwei freie Isocyanatgruppen pro Molekül aufweisen. Bevorzugt weist die Polyisocyanatkomponente freie und/oder blockierte Isocyanatgruppen in einem Bereich von 2 bis 6, bevorzugt von 2 bis 4, besonders bevorzugt von 2 bis 3 auf.

Bevorzugt werden als Polyisocyanat-Komponente B) Diisocyanate Y(NCO)₂ eingesetzt, wobei Y ausgewählt ist aus der Gruppe bestehend aus einem zweiwertigen aliphatischen Kohlenwasserstoffrest mit 4 bis 12 Kohlenstoffatomen, einem zweiwertigen cycloaliphatischen Kohlenwasserstoffrest mit 6 bis 15 Kohlenstoff-Atomen, einem zweiwertigen aroma-tischen Kohlenwasserstoffrest mit 6 bis 15 Kohlenstoff-Atomen, einem zweiwertigen araliphatischen Kohlenwasserstoffrest mit 7 bis 15 Kohlenstoffatomen oder einer Mischung aus mindestens zwei hiervon.

In einer bevorzugten Ausgestaltung der Zusammensetzung ist das Polyisocyanat B) ausgewählt aus der Gruppe bestehend aus Tetramethylendiisocyanat, Pentamethylendiisocyanat (PDI), Hexamethylendiisocyanat (HDI), Dodecamethylendiisocyanat, 1,4-Diiso¬cyanato¬cyclohexan, 1-Isocyanato-3,3,5-trimethyl-5-isocyanatomethyl-cyclohexan (= IPDI, Isophorondiisocyanat), 4,4'-Diisocyanato-dicyclohexyl-methan (H12MDI), 4,4'-Diisocyanatodicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethyl-xylylendiisocyanat, p-Xylylendiisocyanat, p-Isopropylidendiisocyanat sowie aus mindestens zwei dieser Verbindungen bestehende Gemische.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Iminooxadiazindion- und/oder Oxadiazintrionstruktur. Als Beispiel für ein nichtmodifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Polyisocyanate B) sind Hexamethylendiisocyanat (=HDI), Pentamethylendiisocyanat, 1,4-Diisocyanato-cyclohexan, 1-Isocyanato-3,3,5-trimethyl-5-isocyanatomethylcyclohexan (= IPDI), 4,4'-Diisocyanato-dicyclohexyl-methan, 2,4-Diisocyanatotoluol, 2,6-Diisocyanatotoluol, 4,4'-Diisocyanato-diphenylmethan, 2,2'- und 2,4'-Diisocyanatodiphenylmethan, sowie aus mindestens zwei dieser Verbindungen bestehende Gemische.

Besonders bevorzugte Komponenten B) sind Hexamethylendiisocyanat und 1-Isocyanato-3,3,5-trimethyl-5-isocyanatomethyl-cyclohexan.

Gegebenenfalls können diese Isocyanate auch in Abmischung mit aromatischen Isocyanaten eingesetzt werden, wie zum Beipiel Isomere von Toloyldiisocyanat (TDI) und Methylendiphenyldiisocyanat (MDI).

Komponente B) ist in dem Polyurethan der PUD bevorzugt in Mengen in einem Bereich von 5 bis 60 Gew.-%, bevorzugt von 6 bis 45 Gew.-% und besonders bevorzugt von 7 bis 25 Gew.-% enthalten.

In einer bevorzugten Ausgestaltung der Zusammensetzung ist die hydrophilierende Gruppe der Hydrophilierungs-Komponente C) ausgewählt aus der Gruppe bestehend aus einer Sulphonatgruppe, einer Carboxylatgruppen oder einer Kombination aus mindestens zwei hieraus. Geeignete Komponenten C) sind beispielsweise Sulphonat- oder Carboxylatgruppen enthaltende Komponenten wie z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.- Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphon-säure, der analogen Carbonsäuren, der Dimethylolpropionsäure, der Dimethylolbuttersäure, der Umsetzungsprodukte im Sinne einer Michaeladdition von 1 mol Diamin wie z.B. 1,2-Ethandiamin oder Isophorondiamin mit 2 mol Acrylsäure oder Maleinsäure sowie Gemische aus mindestens zwei hiervon.

Die Säuren werden häufig direkt in Ihrer Salzform als Sulphonat bzw. Carboxylat eingesetzt. Es ist jedoch auch möglich, die zur Salzbildung notwendigen Neutralisationsmittel anteilig oder ganz erst während oder nach der Herstellung der Polyurethane zuzugeben.

Für die Salzbildung besonders gut geeignete und bevorzugte tertiäre Amine sind z.B. Triethylamin, Dimethylcyclohexylamin, Ethyldiisopropylamin. Es können auch andere Amine zur Salzbildung eingesetzt werden, wie z.B. Ammoniak, Diethanolamin, Trietha-nolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich andere Neutralisationsmittel wie z.B. Natrium-, Kalium-, Lithium, CalciumHydroxid für Neutralisationszwecke einzusetzen.

Weitere geeignete Komponenten C) sind nichtionisch hydrophilierend wirkende, mono- oder difunktionelle Polyether auf Basis von auf Alkoholen oder Aminen gestarteten Ethylenoxid-Polymeren oder Ethylenoxid/Propylenoxid-Copolymeren, wie Polyether LB 25 (Covestro Deutschland GmbH; Deutschland) oder MPEG 750: Methoxypolyethylenglykol, Molekulargewicht 750 g/mol (z.B. Pluriol^{®} 750, BASF AG, Deutschland).

Bevorzugte Komponenten C) sind N-(2-Aminoethyl)-2-aminoethansulfonat und die Salze der Dimethylolpropionsäure und der Dimethylolbuttersäure.

Komponente C) ist in dem Polyurethan, enthalten in der PUD bevorzugt in einem Bereich von 0,1 bis 15 Gew.-%, besonders bevorzugt von 0,5 bis 10 Gew.-%, ganz besonders bevorzugt von 0,8 bis 5 Gew.-% und noch weiter bevorzugt von 0,9 bis 3,0 Gew.-%, bezogen auf die Gesamtmasse des Polyurethans enthalten.

Bevorzugt ist die mono-, di-, und/oder tri-aminofunktionelle und/oder hydroxyaminofunktionelle Verbindungen D) ausgewählt aus der Gruppe bestehend aus mono-, di-, trifunktionellen Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohe-xylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-amino cyclohexyl)-methan und Diethylentriamin. Weiterhin kommen Adipinsäuredihydrazid, Hydrazin bzw. Hydrazinhydrat in Frage. Selbstverständlich können auch Mischungen mehrerer der genannten, ggf. auch zusammen mit nicht genannten Verbindungen D) eingesetzt werden.

Bevorzugte Komponenten D) sind 1,2-Ethandiamin, 1-Amino-3,3,5-trimethyl-5-amino-methylcyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten D) dienen als Kettenverlängerungsmittel bevorzugt dazu, höhere Molekulargewichte aufzubauen oder als monofunktionelle Verbindungen Molekulargewichte zu begrenzen und/oder ggf. zusätzlich weitere reaktive Gruppen, wie z.B. freie Hydroxylgruppen als weitere Vernetzungsstellen in das Polyurethan einzubauen.

Komponente D) ist in dem Polyurethan in einem Bereich von bevorzugt 0 bis 10 Gew.-%, besonders bevorzugt von 0 bis 5 Gew.-% und ganz besonders bevorzugt von 0,2 bis 3 Gew.-% enthalten, bezogen auf die Gesamtmasse des Polyurethans.

Die gegebenenfalls mit zu verwendende mindestens eine sonstige isocyanatreaktive Verbindung E) ist bevorzugt ein aliphatischer, cycloaliphatischer oder aromatischer Monoalkohol mit 2 bis 22 C-Atomen. In einer bevorzugten Ausgestaltung der Zusammensetzung ist die mindestens eine sonstige isocyanatreaktive Verbindung E) ausgewählt aus der Gruppe bestehend aus Ethanol, Butanol, Hexanol, Cyclohexanol, Isobutanol, Benzylalkohol, Stearylalkohol, 2-Ethylethanol, Cyclohexanol; ungesättigte, für Polymerisationsreaktionen zugängliche Gruppen enthaltende Verbindungen wie z.B. Hydroxyethylacrylat, Hydroxyethylmethacrylat, Hydroxybutylacrylat, Hydroxybutylmethacrylat, Hydroxypropylacrylat, Hydroxypropylmethacrylat, Pentaerythrittrisacylat, hydroxyfunktionelle Umsetzungsprodukte aus Monoepoxiden, Bisepoxiden und/oder Polyepoxiden mit Acrylsäure oder Methacrylsäure oder Mischungen aus mindestens zwei hiervon.

Die Komponente E) ist bevorzugt in dem Polyurethan in einem Bereich von 0 bis 20, ganz bevorzugt von 0 bis 10 Gew.-%, bezogen auf die Gesamtmasse des Polyurethans, enthalten.

Die vorgenannten PUDs können auch durch Zusatz von radikalisch polymerisierbaren Vinylmonomeren und deren Pfropfpolymerisaten im Sinne einer Emulsionspolymerisation durch Zugabe an sich bekannter Polymerisationsinitiatoren modifiziert werden. Sind als Komponente E) Vinylmonomere mit in die PUD eingebaut worden, so werden diese bevorzugt bei der Emulsationspolymerisation als Pfropfgrundlage mit reagieren.

Die Polyurethandispersionen enthalten als Aufbaukomponenten bevorzugt
a) ein oder mehrere Polyiscocyanatverbindungen mit einer Funktionalität ≥ 2,
b) ein oder mehrere Polyhydroxyverbindungen einer Molmasse Mn von 400 bis 8000 g/mol und einer Funktionalität von 1,5 bis 6,
c) gegebenenfalls ein oder mehrere Polyhydroxyverbindungen einer Molmasse < 400 g/mol und einer Funktionalität von 2 bis 4,
d) ein oder mehrere nicht-ionische, isocyanatreaktive Hydrophilierungsmittel,
e) ein oder mehrere isocyanatreaktive potentiell ionische Hydrophilierungsmittel,
f) ein oder mehrere Polyamine mit einer Molmasse von 32 bis 400 g/mol und einer Funktionalität von 1 bis 3 und
g) ein oder mehrere isocyanatreaktive Polyepoxidverbindungen mit einer Epoxid-Funktionalität ≥ 2.

Dabei enthalten die Polyurethandispersionen bevorzugt
5 bis 40 Gew.-%, mehr bevorzugt 10 bis 35 Gew.-%, besonders bevorzugt 15 bis 25 Gew.-% der Komponente a),
20 bis 88,4 Gew.-%, bevorzugt 31 bis 81 Gew.-%, besonders bevorzugt 46 bis 73 Gew.-% der Komponente b),
gegebenenfalls 0 bis 5 Gew.-%, bevorzugt 0,5 bis 4,0 Gew.-%, besonders bevorzugt 1 bis 3 Gew.-% der Komponente c),
1 bis 5 Gew.-%, mehr bevorzugt 1,5 bis 4,5 Gew.-%, besonders bevorzugt 2 bis 4 Gew.-% der Komponente d),
0,1 bis 5 Gew.-%, mehr bevorzugt 0,5 bis 4 Gew.-%, besonders bevorzugt 1 bis 3 Gew.-% der Komponente e),
5 bis 10 Gew.-%, mehr bevorzugt 5,5 bis 9,5 Gew.-%, besonders bevorzugt 6 bis 9 Gew.-% der Komponente f) und
0,5 bis 15 Gew.-%, mehr bevorzugt 1 bis 12 Gew.-%, besonders bevorzugt 2 bis 10 Gew.-% der Komponente g).

Geeignete Polyisocyanate a) sind die dem Fachmann an sich bekannten aromatischen, araliphatischen, aliphatischen oder cycloaliphatischen Polyisocyanate wie sie zum Teil oben schon benannt wurden. Besonders geeignete Polyisocyanate a) sind z.B. 1,4-Butylendiisocyanat, 1,6-Hexamethylendiisocyanat (HDI), Iso-phorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat oder das hydrierte 2,4 und/oder 2,6-Toluylendiisocyanat, 1,5-Naphthylendiisocyanat, 2,4'- oder 4,4'-Di¬phenylmethan-diisocyanat, 1,3- und 1,4-Bis-(2-isocyanato-prop-2-yl)-benzol (TMXDI), 1,3-Bis(isocyanato-methyl)benzol (XDI), (S)-Alkyl-2,6-diisocyanato-hexanoate oder (L)-Alkyl-2,6-diisocyanatohexanoate.

Anteilig können auch Polyisocyanate mit einer Funktionalität > 2 verwendet werden. Hierzu gehören modifizierte Diisocyanate mit Uretdion-, Isocyanurat-, Urethan-, Allophanat-, Biuret-, Iminooxadiazindion- und/oder Oxadiazintrionstruktur sowie nicht-modifizierte Polyisocyanate mit mehr als 2 NCO-Gruppen pro Molekül z.B. 4-Isocyanatomethyl-1,8-octandiisocyanat (Nonantriisocyanat) oder Triphenylmethan-4,4',4"-triisocyanat.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen mit einer mittleren Funktionalität von 2 bis 4, bevorzugt 2 bis 2,6 und besonders bevorzugt 2 bis 2,4.

Als Verbindungen b) einsetzbare polymere Polyole weisen ein Molekulargewicht Mn von 400 bis 8000 g/mol, bevorzugt von 400 bis 6000 g/mol und besonders bevorzugt von 500 bis 3000 g/mol auf. Ihre Hydroxylzahl beträgt bevorzugt 22 bis 400 mg KOH/g, mehr bevorzugt 30 bis 300 mg KOH/g und besonders bevorzugt 40 bis 250 mg KOH/g und weisen eine OH-Funktionalität von 1,5 bis 6, bevorzugt von 1,8 bis 3 und besonders bevorzugt von 1,9 bis 2,1 auf.

Polyole b) sind bevorzugt die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethan-polyesterpolyole, Polyurethanpolyetherpolyole, Polyurethanpolycarbonatpolyole, Polyester-polycarbonatpolyole, Phenol/Formaldehydharze, allein oder in Mischungen. Bevorzugt sind Polyesterpolyole, Polyetherpolyole oder Polycarbonatpolyole, besonders bevorzugt sind Polyesterpolyole.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mn von 400 bis 4 000 g/mol, bevorzugt von 400 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente b) sind Polypropylenoxidpolyole und Polytetramethylenoxidpolyole mit einem Molekulargewicht von 400 bis 4000 g/mol. Hierbei können die besonders niedermolekularen Polyetherpolyole bei entspre-chend hohen OH-Gehalten wasserlöslich sein. Besonders bevorzugt sind jedoch wasserunlösliche Polypropylenoxidpolyole und Polytetramethylenoxidpolyole mit einem Molgewicht von 500 bis 3000 g/mol sowie deren Mischungen.

Gut geeignete Beispiele für Polyesterpolyole b) sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Po-lycarbonsäuren können auch die entsprechenden Polycarbonsäureanhydride oder entsprechenden Polycarbonsäureester von niederen Alkoholen zur Herstellung der Polyester verwendet werden. Beispiele für geeignete Diole sind Ethylenglykol, Butylenglykol, Diethyl-englykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen können gegebenenfalls Polyole mit einer Funktionalität von 3 anteilig verwendet werden, beispielsweise Trimethylolpropan, Glycerin, Erythrit, Pentaerythrit, Triemthylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≤ 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Geeignete Lactone sind z.B. ε-Caprolacton, Butyrolacton und deren Homologe.

Bevorzugt sind Polyesterpolyole b) auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole b) auf Basis von Butandiol und/oder Neopentylglykol und/oder Hexandiol mit Adipinsäure und/oder Phthalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugs-weise solche, die neben endständigen OH-Gruppen Ether- oder Estergruppen aufweisen, z.B. Produkte, die durch Umsetzung von 1 Mol Hexandiol mit mindestens 1 Mol, bevor-zugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole b) auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Insgesamt sind jedoch als Komponente b) Polyesterpolyole besonders bevorzugt.

Die gegebenenfalls zum Aufbau der Polyurethanharze einsetzbaren niedermolekularen Polyole c) bewirken in der Regel eine Versteifung und/oder eine Verzweigung der Polymerkette. Das Molekulargewicht liegt bevorzugt zwischen 62 und 200 und ihre Funktionalität ist bevorzugt 2 bis 3. Geeignete Polyole c) können aliphatische, alicyclische oder aromatische Gruppen enthalten. Genannt seien hier beispielsweise die niedermolekularen Polyole mit bis zu etwa 20 Kohlenstoffatomen je Molekül, wie z.B. Ethyl¬englykol, Diethy-lenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinon-dihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäureester, Adipinsäure-(β-hydroxyethyl)ester oder Terephthalsäure-bis(β-hydroxyethyl)-ester können verwendet wer-den. Bevorzugt wird Hexandiol und/oder Trimethylolpropan und/oder Butandiol. Besonders bevorzugt sind Trimethylolpropan und/oder Butandiol.

Geeignete nichtionisch hydrophilierend wirkende Verbindungen d) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 2, aber auch Verbindungen der allgemeinen Formel (I), 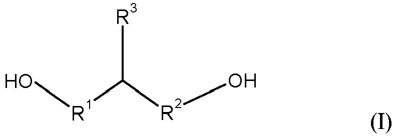 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen d) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3 Ethyl-3-hydroxymethyloxetan oder Tetrahydrofurfurylalkohol, Diethylenglykolmonoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Di-methylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Die Molmasse Mn dieser Bausteine beträgt bevorzugt 300 g/mol bis 6000 g/mol, mehr bevorzugt 500 g/mol bis 4000 g/mol und besonders bevorzugt 750 g/mol bis 3000 g/mol bei einer Funktionalität von 1.

Geeignete derartige nichtionisch hydrophilierende, monfunktionelle Verbindungen d) sind beispielsweise monofunktionelle Alkoxypolyethylenglycole wie z.B. Methoxypolyethylenglykole (MPEG Carbowax^{®} 2000 oder Methoxy PEG-40, Molgewichtsbereich 1800 bis 2200, The Dow Chemical Company), monofunktionelle Polyethermonoalkylether wie z.B. LB 25 aufgebaut aus Butanol und Ethylenoxid sowie Propylenoxid, mit einer mittleren Molmasse Mn von 2250 g/mol von Bayer Material Science, monofunktionelle Polyetheramine (Jeffamine^{®} M 1000, PO/EO mol-Verhältnis 3/19 und M 2070, PO/EO mol-Verhältnis 10/31, Huntsman Corp.).

Bevorzugt werden als Verbindung d) MPEG Carbowax^{®} 2000, LB 25 oder Jeffamine^{®} M 2070 eingesetzt. Besonders bevorzugt sind MPEG Carbowax^{®} 2000 oder LB 25.

Die Komponente e) enthält potentiell ionische Gruppen, die entweder kationischer oder anionischer Natur sein können. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen e) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Amino-ethyl)- β-alanin, 2-(2-Amino-ethylamino)-ethansulfonsäure, Ethylendiamin-propyl- oder butylsulfonsäure, 1,2- oder 1,3-Propylen-diamin-β-ethylsulfonsäure, Äpfelsäure, Zitronensäure, Glykolsäure, Milchsäure, Glycin, Alanin, Taurin, Lysin, 3,5-Diamino¬benzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO3, z.B. beschrieben in der DE-A 2 446 440 (Seite 5-9, Formel I-III) sowie in kationische Gruppen überführbare Bausteine wie N-Methyldiethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen und eine Funktionalität von 1,9 bis 2,1 aufweisen. Besonders bevorzugte ionische Verbindungen weisen eine Aminfunktionalität von 1,9 bis 2,1 auf und enthalten Sulfonatgruppen als ionische oder potentiell ionische Gruppen, wie die Salze von N-(2-Aminoethyl)- β-alanin, der 2-(2-Amino-ethylamino-)ethansulfonsäure oder des Additionsproduktes von IPDI und Acrylsäure (EP-A 0 916 647, Beispiel 1).

Die zur Kettenverlängerung eingesetzten Polyamine f) weisen bevorzugt eine Funktionalität zwischen 1 bis 2 auf und sind z.B. Di- oder Polyamine sowie Hydrazide, z.B. Ethylendi-amin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpenta¬methylen¬diamin, Diethylentriamin, 1,3- und 1,4-Xylylendiamin, α,α,α',α'etramethyl-1,3- und 1,4-xylylendiamin und 4,4-Diaminodicyclohexylmethan, Dimethylethylendiamin, Hydrazin oder Adipinsäuredihydrazid.

Als Komponente f) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin.

Bevorzugt sind Diethanolamin und/oder Hydrazin und/oder Isophorondiamin (IPDA) und/oder Ethylendiamin. Besonders bevorzugt sind Hydrazin und/oder Isophorondiamin und/oder Ethylendiamin. Ganz besonders bevorzugt ist eine Mischung aus Hydrazin und IPDA.

Geeignete Verbindungen g) sind isocyanatreaktive Polyepoxidverbindungen mit einer Epoxyfunktionalität zwischen 2 und 4 und einer isocyanatreaktiven Funktionalität zwischen 1 und 2, bevorzugt mit einer Epoxid-Funktionalität zwischen 2 und 4 und einer isocyanatreaktiven Funktionalität von 1, besonders bevorzugt mit einer Epoxid-Funktionalität von 2 und einer isocyanatreaktiven Funktionalität von 1. Dazu zählen insbesondere hydroxyfunktionelle Polyepoxidverbindungen, wie z.B. Glycerindiglycidylether, 1,4-bis(oxiran-2-yloxy)butan-2-ol, 1,5-bis(oxiran-2-ylmethoxy)pentan-2-ol, 1-(oxiran-2-ylmethoxy)-6-(oxiran-2-yloxy)hexan-2-ol, 1-(oxiran-2-ylmethoxy)-6-(oxiran-2-yloxy)-heptan-2-ol, 1-(oxiran-2-ylmethoxy)-6-(oxiran-2-yloxy)octan-2-ol, 1-(oxiran-2-ylmethoxy)-6-(oxiran-2-yloxy)nonan-2-ol, 1-(oxiran-2-ylmethoxy)-6-(oxiran-2-yloxy)decan-2-ol 1,3-di(oxiran-2-yl)propan-2-ol, 1,2:7,8-dianhydro-3,4,6-trideoxyoctitol, 1,5-di(oxiran-2-yl)pentan-3-ol, bevorzugt ist Glycerindiglycidylether.

Die Menge der einzusetzenden Komponente g) in der erfindungsgemäßen Polyurethanpolyharnstoff-Dispersion variiert je nach Anwendung. Für die Verwendung in einem 1K-System werden bevorzugt 0,1 bis 7,0 Gew.-%, besonders bevorzugt 0,5 bis 5 Gew.-% ein-gesetzt. In der Verwendung als 2K-System kommen bevorzugt 0,5 bis 15 Gew.-%, besonders bevorzugt 3 bis 12 Gew.-% der Komponente g) zum Einsatz.

Zur Herstellung der PUD können alle aus dem Stand der Technik bekannten Verfahren wie z.B. Prepolymer-Mischverfahren, Acetonverfahren oder Schmelzdispergierverfahren verwendet werden. Bevorzugt wird die PUD nach dem Aceton-Verfahren hergestellt.

Bevorzugt ist ein Verfahren zur Herstellung der wässrigen Polyurethanpoly(harnstoff)-Dispersionen, wobei zunächst durch Umsetzung der Komponenten a), b), c), d), e) und g) ein Isocyanat- und Epoxygruppenhaltiges Polyurethan-Präpolymer hergestellt wird und dieses in einem weiteren Schritt mit NH₂- und NH-funktionellen Komponenten e) und f) kettenverlängert und in die wässrige Phase überführt wird.

Für die Herstellung der PUD nach dem Aceton-Verfahren werden üblicherweise die Bestandteile b), c), d), e) und g), die keine primären oder sekundären Aminogruppen aufweisen dürfen und die Polyisocyanatkomponente a) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton oder Butanon.

Anschließend werden die gegebenenfalls zu Beginn der Reaktion noch nicht zugegebenen Bestandteile von a) - g) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten a), b), c), d), e) und g) zum Prepolymer erfolgt teilweise oder vollständig, bevorzugt aber vollständig. Es werden so Polyurethan-Prepolymere, die freie Isocyanat- und Epoxidgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und NH-funktionelle Komponenten e) und f) mit den noch verbliebenen Isocyanat- und Epoxidgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von e) und f) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 100 %, bevorzugt zwischen 60 bis 100 %, besonders bevorzugt zwischen 70 und 100 %.

Die aminischen Komponenten e) und f) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Die Herstellung der Polyurethandispersion aus den Prepolymeren erfolgt im Anschluss an die Kettenverlängerung. Dazu wird das gelöste und ketten-verlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Vorteile des erfindungsgemäßen Verfahrens sind mindestens die folgenden:
1. Verbesserte Lagerfähigkeit: Die entwässerte Zwischenform weist eine deutlich höhere Lagerstabilität auf als die wässrigen Dispersionen.
2. Effektive Entkeimung: Auch bereits verkeimte Polyurethandispersionen werden nach Durchlaufen des erfindungsgemäßen Verfahrens als keimfrei klassifiziert. Die verbesserte Keimfreiheit und Stabilität der dispergierten Produkte führt zu einer höheren Produktqualität und einer geringeren Reklamationsrate.
3. Flexibilität in der Verarbeitung: Die entwässerten Produkte können je nach Eigenschaften als pulverige Feststoffe oder hochviskose Polymere verarbeitet und transportiert werden.
4. Kosteneffizienz / Energieeinsparung: Durch die Möglichkeit des Transports in entwässerter Form können Kosten für spezielle Temperaturkontrollmaßnahmen eingespart werden.
5. Vielseitigkeit: Das Verfahren ist auf verschiedene Arten von Polyurethandispersionen anwendbar, einschließlich solcher mit aliphatischen Urethan- und Harnstoffsegmenten.

### Industrielle Anwendbarkeit:

Das erfindungsgemäße Verfahren ermöglicht die Herstellung von Polyurethandispersionen mit verbesserter Lagerstabilität und Keimfreiheit. Dies ist besonders vorteilhaft für Anwendungen in der Klebstoff-, Lack- und Beschichtungsindustrie, wo lange Haltbarkeit und hygienische Bedingungen von großer Bedeutung sind. Die Möglichkeit, die Polyurethandispersionen in entwässerter Form zu lagern und zu transportieren, eröffnet neue logistische Optionen und kann zu erheblichen Kosteneinsparungen führen.

Das erfindungsgemäße Verfahren eignet sich besonders für die Herstellung und den Transport von Polyurethandispersionen für folgende Anwendungen:
1. Wässrige Klebstoffe
2. Wässrige Lacke
3. Beschichtungsmittel
4. Gummiwerkstoffe in dispergierter Form

Ein weiterer Gegenstand der Erfindung betrifft einen Kit-of-Parts, beinhaltend eine erfindungsgemäße entwässerte PUD oder eine PUD hergestellt nach dem erfindungsgemäßen Verfahren. Dem Kit können noch weitere Bestandteile beiliegen, die bevorzugt bei der Re-Dispergierung behilflich sind.

### Experimenteller Teil

Die vorliegende Erfindung wird unter Bezugnahme auf die folgenden Beispiele weiter beschrieben, ohne dass eine Bindung an diese erfolgen soll.

### Einsatzstoffe:

Aceton, Qualität zur Synthese, bezogen von Sigma-Aldrich, Deutschland

### Polyurethan-Dispersionen

Polyurethandispersion A: ist eine anionische, hochmolekulare kristallisierende Polyester-Polyurethan-Dispersion mit einem Feststoffgehalt von 50% zur Herstellung von Klebstoffen z. B. für die Schuh-, Möbel-, Auto- und Bauindustrie. Besonders geeignet für Anwendungen auf weichmacherhaltigem PVC. Das Produkt ist als Dispercoll^{®} U 56 verfügbar von der Covestro Deutschland GmbH, Deutschland.

Polyurethandispersion B: ist eine anionische, hochmolekulare kristallisierende Polyester-Polyurethan-Dispersion mit einem Feststoffgehalt von 40% zur Herstellung von Klebstoffen z. B. für die Schuh-, Möbel-, Auto- und Bauindustrie. Besonders geeignet für Anwendungen auf weichmacherhaltigem PVC. Das Produkt ist als Dispercoll^{®} U 53 verfügbar von der Covestro Deutschland GmbH, Deutschland.

Polymerdispersion C: Das Produkt ist als Dispercoll^{®} C 84 verfügbar von der Covestro Deutschland GmbH, Deutschland.

Polymerdispersion D: OH-funktionelles Polyacrylat kombinierbar mit aliphatischem PIC für 2K-PU-Klarlacke/Decklacke für Autoreparatur, Transport und Industriebeschichtung. Mit Aminoharzen oder BL-PIC für 1K-Industrieeinbrennlacke. Das Produkt ist als Bayhydrol^{®} A 145 verfügbar von der Covestro Deutschland GmbH, Deutschland

### Methoden:

### Charakterisierung der Produkte:

Zur Beurteilung der Qualität der erhaltenen Polyurethandispersionen werden folgende Methoden eingesetzt:
a) Partikelgrößenanalyse: Dynamische Lichtstreuung zur Bestimmung der Partikelgrößenverteilung.
b) Viskositätsmessung: Rotationsviskosimeter zur Bestimmung der Fließeigenschaften.
c) Feststoffgehaltbestimmung: Gravimetrische Bestimmung nach Trocknung.
d) GPC-Analyse: Zur Bestimmung der Molekulargewichtsverteilung.
e) DSC-Analyse: Zur Bestimmung von Schmelzpunkt und Glasübergangstemperatur,
f) BacTrac Test zur Bestimmung des Keimstatus
g) Dip-Test: Mikrobiologische Untersuchung zur Überprüfung der Keimbelastung.

Im Detail wurden dazu folgende Methoden eingesetzt:
a) Bestimmung der Teilchengröße bzw. Partikelgrößen erfolgte mittels dynamischer Lichtstreuung (DLS) in einem Zetasizer Nano ZS (Malvern Instruments) unter Ermittlung des intensitätsgewichteten harmonischen Mittel des hydrodynamischen Durchmessers (Z-Average).
b) Bestimmung der Rotationsviskosität nach DIN EN ISO 3219-1 - 2021-08 bei 23 °C und 30 upm mit einer Spindel LV 1 bis 4, je nach passendem Viskositätsbereich.
c) Die Bestimmung der Restfeuchte erfolgte mittels einer Feststoffwaage durch eine "Massenverlust"-Methode unter Verwendung einer HE73 Moisture Analyzer (Fa Mettler Toledo) bei 125°C mit einem Abbruchkriterium, dass sich das Gewicht innerhalb von 75s um ≤ 1 mg ändert.
d) Das Massenmittel Mw wurde über Gelpermeationschromatographie GPC unter Verwendung von N,N-dimethylacetamid (DMAc) als Eluent durchgeführt. Analyse erfolgte auf einem SECurity GPC-System der Fa. PSS Polymer Service mit einer Fließrate von 1,0 mL/min, einer PSS GRAM Säule und einem RID-Detektor. Kalibration gegen Polystyrolstandards bekannten Mw.
e) Die Bestimmung der Glasübergangstemperatur Tg und des Schmelzpunktes Tm erfolgte via DSC bei 20 K/min in Anlehnung an DIN EN ISO 11357-1 - 2017-02.
f) Bestimmung des Keimstatus der Polyurethan-Polyharnstoff-Dispersionen via Impedanzmessung einer angeimpften Nährlösung:
   Die Bestimmung der Kontamination bzw. des Bakterienwachstums in den Polyurethandispersionen vor bzw. nach den Schritten 1) und 2) des erfindungsgemäßen Verfahrens, insbesondere der Polyharnstoff-Polyurethan-Dispersionen erfolgte mit dem BacTrac 4300 der Fa. SY-LAB Geräte GmbH, (Neu-Purkersdorf, Österreich). Dazu wurde 1 ml der Polyurethandispersion in die Messzelle BiMedia 001C eingefüllt. Die Messzelle wurde mit der Schraubkappe verschlossen und in den auf 30 °C temperierten Messplatz des BacTrac 4300 eingestellt.
   Die Vermehrung der Mikroorganismen in der Polyurethan-Dispersionsprobe geht mit der Zunahme der Stoffwechselprodukte einher. Als Maß für die Bestimmung der Stoffwechselprodukte nutzt das Messgerät BacTrac 4300 den Wechselstromwiderstand (Impedanz) der Probe. Der Schwellenwert (E) kann individuell festgelegt werden. Bei Überschreiten des Schwellenwertes (E) wird die Probe als nicht keimfrei erachtet. Für alle Messungen wurde der Schwellenwert (E) mit dem Wert 8 und die max. Messdauer mit 72 h festgelegt. Wird der Schwellenwert innerhalb der 72h nicht überschritten so gilt die Probe als Keimfrei. Die Temperatur der Probe lag während der Messung bei 30 °C.
g) Beschreibung Dip-Test-System zur Bestimmung der Keimbelastung

Keimindikatoren zur Bestimmung der Gesamtkeimzahl sowie von Hefen und Schimmelpilzen, Mikrocount^{®} combi (Schülke&Mayr GmbH, Norderstedt, DE) wurden in Anlehnung zur DIN EN ISO 23321 genutzt. Die Keimindikatoren wurden in das zu prüfende flüssige Material (Polyurethan-Dispersion) eingetaucht und nach Abtropfen bei 30°C für 3 Tage kultiviert. Die Keimbelastung wurde anhand der Koloniedichte (Anzahl Mikroorganismen pro ml) zum mitgelieferten Auswertungstableau / Schaubild abgelesen bzw. bei geringer Koloniedichte die Kolonieanzahl ermittelt.

Sofern nicht anders angegeben, handelt es sich bei allen Prozentsätzen um Gewichtungsprozentsätze, die auf dem Gesamtgewicht, insbesondere der jeweils untersuchten Polyurethandispersion, basieren.

### Allgemeine Versuchsbeschreibung:

In Schritt 1) des erfindungsgemäßen Verfahrens wurden jeweils 500 g der Polyurethan-Ausgangsdispersionen A oder B in einem 1-1-Kunststoffbehälter 24 h lang bei -18 °C eingefroren und anschließend 24 h lang bei Raumtemperatur aufgetaut. Die erhaltene Aufschlämmung von aggregierten Polyurethanpolypartikeln in Wasser wurde durch Filtration von überstehendem Wasser befreit. Erhalten wurden feuchte Polymerpartikel mit einem Restwassergehalt von ca. 20-30 Gew.-%.

Die so erhaltenen feuchten Polyurethanpartikel wurden, wenn nicht anders beschrieben, in einem Trockenofen bei 35°C bis 40 °C bis auf einen gewünschten Restwassergehalt getrocknet. Erhalten wurden entwässerte Polyurethanpolymere gemäß Schritt 1) des erfindungsgemäßen Verfahrens mit einem Restwassergehalt von ≤ 15 Gew.-%.

In Schritt 2) des erfindungsgemäßen Verfahrens wurden die jeweiligen entwässerten Polyurethanpolymere mit einer Dispergier-Mischung enthaltend Wasser und Aceton re-dispergiert. Dazu wurden 100g entwässertes Polyurethanpolymer mit einem Restwassergehalt von < 1% in 500-ml-Glasflaschen mit Schraubverschluss mit der gewünschten Dispergier-Mischung in Form einer Wasser-Lösungsmittelmischung, auf einem Schüttler mit einer Geschwindigkeit von 160 U/min für 6h geschüttelt, bis das Material vollständig re-dispergiert war. Es wurde jeweils eine homogene weiß-bläuliche Dispersion erhalten.

Das re-dispergierte Polyurethanpolymer wurde anschließend in einen 11 Kolben überführt und unter Rühren bei einer Temperatur < 48°C und Vakuum < 70 mbar vom Lösungsmittel bis auf einen Lösungsmittelgehalt < 1 Gew.-% befreit, wobei gegebenenfalls die Feststoffkonzentration durch Wasserzugabe während oder nach dem Entgasungsprozess angepasst wurde.

### Versuche zur Alterungsbeständigkeit:

Das im Schritt 1) des erfindungsgemäßen Verfahrens erhaltene Produkt, in Form der entwässerten Polyurethanpolymere, wurde zur Untersuchung der Alterungsbeständigkeit für einen gewünschten Zeitraum sieht Tabelle 1, bei RT und 50% rel. Luftfeuchtigkeit in einem geschlossenen PE-Beutel aufbewahrt und im Anschluss wie im Schritt 2) beschrieben, re-dispergiert. Zur Bestimmung der Alterungsbeständigkeit wurden jeweils 20g der re-dispergierten Polyurethanpolymere im Trockenschrank in einer Teflonschale bei 40°C auf einen Restwassergehalt von < 1% getrocknet und davon die Lösungsviskosität als 10%tige Lösung in THF bestimmt.

### Erfindungsgemäße Versuche sind mit* gekennzeichnet

### Experimenteller Teil

Die unten angegebenen Teile entsprechen Gewichtsanteilen. Die Summe der Gewichtsanteile muss nicht 100 Gew.-% entsprechen.

### Versuch 1 (nicht-erfindungsgemäß)

Ausgangsstoff ist eine verkeimte Polyurethandispersion B mit folgenden Ergebnissen aus dem "Keimtest".

| | |
|---|---|
| KBE/mL: | 1*10⁶ Keime |
| BacTrac | Stunden bis zur Überschreitung des Schwellenwerts 11 |

1. 11 der verkeimten Polymerdispersion B wurden für 24h bei -18°C in einer 2l PE-Flasche mit Schraubverschluss eingefroren und im Anschluss bei 23°C für 24h aufgetaut. Von der erhaltenen Aufschlämmung von aggregiertem Polyurethanpolymer in Form von grobkörnigen weißen Polymerpartikel in Wasser im Verhältnis 1:1 wurden 50g entnommen in eine 250 ml Glasflasche mit Schraubverschluss überführt, mit 50 g Aceton versetzt und 6h auf einem Laborschüttler Typ 3017 der Firma GFL bei 100 U/min innig vermengt, bis eine homogene weiße Dispersion des Polyurethanpolymers in Wasser beobachtet wurde. Im Anschluss wurde überschüssiges Aceton bei < 48 °C und Unterdruck von 0,70 mBar abdestilliert bis der Rest Acetongehalt < 1 % betrug. Es wurde eine wässrige weiß-bläuliche Dispersion mit einem Feststoffgehalt von ca. 50 Gew.-% erhalten, die noch leicht nach Aceton roch. An dieser Dispersion wurde wiederum der Keimtest durchgeführt.

| | |
|---|---|
| KBE/mL | 10⁴ Keime + 3 Fungi |
| BacTrac | Stunden bis zur Überschreitung des Schwellenwerts 9 |

Während die Zahl an Bakterien deutlich reduziert wurde, wurde die Kontamination durch Pilze (Fungi) jedoch nicht effizient unterdrückt. Somit wurde das Ziel der Entkeimung mit der Methode des Versuch 1 nicht erreicht.

### Erfindungsgemäße Versuche 2* und 3*:

Ausgangsstoff war eine verkeimte Dispersion B mit 50 Gew.-% Wassergehalt, mit folgenden Ergebnissen aus dem "Keimtest" vor Schritt 1) des erfindungsgemäßen Verfahrens:

| | |
|---|---|
| KBE/mL: | 1*10⁶ Keime |
| BacTrac | Stunden bis zur Überschreitung des Schwellenwerts 11 |

11 der verkeimten Polyurethan-Dispersion wurde 24 h bei -18 °C in einer verschlossenen 2l PE-Flasche gelagert. Die Dispersion war nach Lagerung vollständig eingefroren. Im Anschluss wurde die Flasche, enthaltend die eingefrorene Dispersion, 24 h bei 23 °C gelagert. Im Anschluss an die Lagerung war die eingefrorene Dispersion aufgetaut, wobei eine Aufschlämmung von aggregiertem Polyurethanpolymer in Form von grobkörnigen weißen Polymerpartikel in Wasser ergab. Von der so erhaltenen Aufschlämmung wurde überständiges Wasser durch Filtration entfernt und es wurden feuchte Polyurethanpartikel mit ca. 25 Gew.-% Wasseranteil erhalten.

**Versuch 2*:** Die feuchten Polyurethanpartikel erhalten nach der Gefrierkoagulation der Polyurethandispersion B und Abfiltrieren von überschüssigem Wasser wurden auf einen Restfeuchtegehalt von < 1 % bei 40 °C einem Umlauftrockenschrank der Firma Memert UF260 Plus getrocknet und es wurde ein grobes weißes Pulver als entwässertes Polyurethanpolymer nach Schritt 1) des erfindungsgemäßen Verfahrens erhalten.

**Versuch 3*:** In diesem Versuch wurden die feuchten Polyurethanpartikel aus der Polyurethandispersion B nach Gefrierkoagulation der Ausgangsdispersion und Abfiltration von überschüssigem Wasser vor der Trocknung noch mit 1 l destilliertem Wasser gewaschen bevor sie wie in Versuch 2* getrocknet wurden. Es wurde ebenfalls ein grobes weißes Pulver als entwässertes Polyurethanpolymer nach Schritt 1) des erfindungsgemäßen Verfahrens erhalten.

Die erhaltenen entwässerten Polyurethanpolymere nach Schritt 1) des erfindungsgemäßen Verfahrens aus Versuch 2* und 3* wurden für 4 Wochen bei 23 °C in einem geschlossenen PE-Behälter gelagert. Im Anschluss daran wurden die erhaltenen Feststoffe mit Wasser und Aceton im Verhältnis 1:1:2 entsprechend Schritt 2) des erfindungsgemäßen Verfahrens re-dispergiert und überschüssiges Aceton wurde bei < 48 °C und Unterdruck von 70 mBar bis auf einen Restgehalt von < 1% abdestilliert. Es wurde eine homogene Dispersion der Polyurethanpolymere in Form einer weiteren PUD in Wasser erhalten, die noch leicht nach Aceton roch.

| **Einsatzstoffe** | **2*** | **3*** |
|---|---|---|
| Verfahrensschritt 1): | Einfrieren | Einfrieren |
| | Auftauen | Auftauen |
| | Abfiltrieren | Abfiltrieren |
| | Trocknen | Waschen mit 1 l Wasser |
| | | Trocknen |
| Verfahrensschritt 2): | Aceton Zugabe | Aceton Zugabe |
| | Destillieren | Destillieren |
| Dispersion B | 37,66 g (trocken) | 37,70 g (trocken) |
| Aceton | 75 g | 75 g |
| Wasser | 37,34 g | 37,30 g |
| Aussehen nach Destillation | Cremig, weiß, hochviskos. | Cremig, weiß, hochviskos. |
| Feststoffgehalt % nach Destillation nach Verfahrensschritt 2) | 48 % | 49 % |
| Dip-Test nach Destillation BacTrac test | keimfrei | keimfrei |
| | Schwelle nicht überschritten | Schwelle nicht überschritten |

### Alterungsversuche: 4* und 5.

Eine Polyurethandispersion A wurde im erfindungsgemäßen Versuch 4* nach Einfrieren, Auftauen, Abfiltrieren und Trocknen in Schritt 1) des erfindungsgemäßen Verfahrens und wie in erfindungsgemäßem Versuch 2* beschrieben in ein entwässertes Polyurethanpolymer mit einem Restwassergehalt von < 1% überführt. Dieses entwässerte Polyurethanpolymer wurde nach den in Tabelle 1 aufgeführten Lagerzeiten bei 23°C in einer PE-Tüte unter Luftabschluss gelagert und es wurde jeweils eine 10%ige Lösung des polymeren Feststoffs in THF hergestellt und die Viskosität mittels Rotationsviskosimeter bestimmt.

Alternativ wurde die Polyurethandispersion A in dem nicht-erfindungsgemäßen Versuch 5 nach Einfrieren und Auftauen ohne Filtration nach den in Tabelle 1 aufgeführten Lagerzeiten bei 23 °C in einer PE-Tüte unter Luftabschluss gelagert, im Anschluss im Umlufttrockner bei 40°C auf eine Restfeuchte von < 1Gew.-% getrocknet und es wurde jeweils eine 10%ige Lösung des polymeren Feststoffs in THF hergestellt und die Viskosität mittels Rotationsviskosimeter bestimmt.

**Tabelle 1: Viskositätswerte während Lagerung**

| **Zeit in Tagen** | **Versuch 4* Viskosität in mPas** | **Versuch 5 Viskosität in mPas** |
|---|---|---|
| 0 | 91 | 90 |
| 30 | 92 | 57 |
| 70 | 88 | 55 |
| 85 | 92 | 58 |
| 135 | 82 | 46 |
| 180 | 79 | 32 |

Wie man anhand der Werte aus Tabelle 1 erkennen kann, zeigte der getrocknete Feststoff aus dem erfindungsgemäßen Versuch 4* eine deutlich höhere Alterungsstabilität als der nicht-erfindungsgemäße Vergleichsversuch 5. Dies wurde anhand der sich ändernden Viskositätswerte bewertet, da die Viskosität ein Maß für das Vorliegen von Polymerketten ist. Es ist aus Tabelle 1 zu erkennen, dass die gelagerten entwässerten Polyurethanpolymere aus Versuch 4* kaum Abbau der Polymerketten zeigen, was sich als Viskositätsstabilität über die Lagerzeit von ca. 180 Tagen zeigt, im Gegensatz zu dem nicht getrockneten Polyurethanpolymeren aus Versuch 5, der einen extremen Abbau der Polymerketten erfahren hat, da die Viskosität um zweidrittel des Ursprungswertes abgenommen hat.

Im Anschluss an die Lagerung wurden die erhaltenen Polyurethanpolymere aus den Versuchen 4* und 5 mit Aceton und Wasser re-dispergiert und überschüssiges Aceton wurde weitgehend bei < 48 °C und Unterdruck von 70 mBar abdestilliert. Es wurde jeweils eine weiß-bläuliche Dispersion der Feststoffe in Wasser erhalten, die noch leicht nach Aceton roch.

Vergleichsversuche 6 und 7.

Bei den Dispersionen C und D handelte es sich nicht um Polyurethandispersionen.

Dispersion C war eine Polychloroprendispersion und fiel nach der Gefrierkoagulation als gummiartiger Block an, der zerkleinert im Ofen bei 40°C getrocknet wurde. Dabei wurde ein zähes gummiartiges Material erhalten, das nicht durch die erfinderischen Dispergier-Mischungen re-dispergiert werden kann.

Dispersion D fiel als viskose Flüssigkeit nach Trocknen der Dispersion im Umluftofen bei 40°C an. Die erhaltene viskose Flüssigkeit konnte nicht durch die erfinderische Dispergier-Mischung re-dispergiert werden.

## Patentansprüche

1. Ein Verfahren zur Haltbarmachung und Entkeimung von Polyurethandispersionen umfassend mindestens die Schritte:
1) Überführen einer Polyurethandispersion in eine entwässerte Form mit einem Wassergehalt von ≤ 15 Gew.-%, unter Erhalt von entwässerten Polyurethanpolymeren;
2) Re-Dispergierung der entwässerten Polyurethanpolymere mit Hilfe einer Dispergier-Mischung enthaltend Wasser und mindestens ein Lösungsmittel unter Erhalt einer weiteren Polyurethandispersion mit einem Gehalt an Lösungsmittel von ≤ 20 Gew.-%.,

2. Das Verfahren nach Anspruch 1, wobei mindestens eines des mindestens einen Lösungsmittels zumindest teilweise wasserlöslich ist.

3. Das Verfahren nach Anspruch 1 oder 2, wobei mindestens eines des mindestens einen Lösungsmittels entweder einen Siedepunkt unterhalb von 100°C aufweist oder ein Azeotrop mit Wasser bildet.

4. Das Verfahren nach einem der vorhergehenden Ansprüche, wobei das mindestens eine Lösungsmittel ausgewählt ist aus der Gruppe bestehend aus einem Keton, einem Ester, einem Ether, einem Carbonat, einem Alkohol oder einer Mischung aus mindestens zwei hiervon.

5. Das Verfahren nach einem der vorhergehenden Ansprüche, wobei zumindest eines des zumindest einen Lösungsmittels ein Keton ist, bevorzugt Aceton.

6. Das Verfahren nach einem der vorhergehenden Ansprüche 1 bis 4, wobei das mindestens eine Lösungsmittel ausgewählt ist aus der Gruppe bestehend aus Aceton, Methylethylketon, Ethylacetat, Methylacetat, Methanol, Ethanol, Isopropanol, N-Methyl-2-pyrrolidon, Tetrahydrofuran, Dimethylcarbonat oder einer Mischung aus mindestens zwei hiervon.

7. Das Verfahren nach einem der vorhergehenden Ansprüche, wobei die Re-Dispergierung aus Schritt 2) in mindestens zwei Schritten stattfindet:
2') mechanisches Vermengen der entwässerten Polyurethanpolymere aus Schritt 1) mit der Dispergier-Mischung umfassend mindestens Wasser und mindestens ein Lösungsmittel unter Erhalt der weiteren Polyurethandispersion.
2'') Entfernen des mindestens einen Lösungsmittels aus der Dispersion bis auf einen Restwert < 20 Gew.-%.

8. Das Verfahren nach einem der vorhergehenden Ansprüche, wobei die Ausgangspolyurethandispersion vor oder nach der Entwässerung formuliert wird, bevorzugt vor der Entwässerung in Schritt 1) und vor der Re-Dispergierung in Schritt 2).

9. Das Verfahren nach einem der vorhergehenden Ansprüche, wobei das Produkt aus Schritt 1) eine Haltbarkeit von ≥ 3 Monaten, bevorzugt von ≥ 4 Monaten, besonders bevorzugt von ≥ 6 Monaten aufweist.

10. Eine Polyurethandispersion erhältlich nach einem Verfahren gemäß einem der Ansprüche 1 bis 9, wobei sich der Feststoffanteil der Polyurethandispersion vor Schritt 1) um nicht mehr als ± 15 Gew.-%, vom Feststoffgehalt der Polyurethandispersion nach Schritt 2) unterscheidet.

11. Die Polyurethandispersion gemäß Anspruch 10, wobei die erhaltene Polyurethandispersion keimfrei ist.

12. Die Polyurethandispersion gemäß einem der Ansprüche 10 oder 11, wobei die erhaltene Polyurethandispersion formuliert ist.

13. Die Polyurethandispersion gemäß einem der Ansprüche 10 bis 12 wobei der Schritt 1) örtlich und zeitlich unabhängig von Schritt 2) erfolgt.

14. Verwendung einer Polyurethandispersion gemäß einem der Ansprüche 10 bis 13 oder hergestellt gemäß einem der Ansprüche 1 bis 9 zur Formulierung von Klebstoffen oder Lacken.

15. Kit-of-Parts, beinhaltend eine entwässerte PUD nach einem der Ansprüche 10 bis 13 oder hergestellt nach einem der Ansprüche 1 bis 9.
